Europäisches Patentamt

European Patent Office

Office européen des brevets

(11) Publication number: **0 626 217 A1**

# EUROPEAN PATENT APPLICATION

(21) Application number: **94201448.1**

(22) Date of filing: **26.05.94**

(51) Int. Cl.5: **B09B 3/00**, C08K 11/00, E04C 2/16, E04C 2/04

(30) Priority: **28.05.93 NL 9300927**

(43) Date of publication of application:
**30.11.94 Bulletin 94/48**

(84) Designated Contracting States:
**AT BE CH DE DK FR GB IT LI NL SE**

(71) Applicant: **TERRA IJSSEL B.V.**
**Koppenwaard 1**
**NL6988 BR Lathum (NL)**
Applicant: **BURO Drs. H.W. HOLMAN EN**
**GEASSOCIEERDEN B.V.**
**Koepoortstraat 17**
**NL-6981 AP Doesburg (NL)**

(72) Inventor: **Holman, Harm Willem**
**Koepoortstraat 17**
**NL-6981 AP Doesburg (NL)**

(74) Representative: **de Wit, Gerard Frederik, Ir.**
**Octrooi- en Merkenbureau de Wit B.V.**
**Breitnerlaan 146**
**NL-2596 HG Den Haag (NL)**

(54) **Method for working up waste materials and object obtained with the method.**

(57) The invention provides a method for working up of possibly partly polluted materials by accommodating them in an unleaching plastic material. Therewith objects can be obtained with very good mechanical properties, which, when the normal costs necessary for transporting aand disposal of the polluted waste materials are also calculated, are competitive of cost price and combine good till very good mechanical properties with the possibility of any desired and attractive appearance. Especially with the invention debris washing silt or other silt is worked up, which gives an unique possibility to reuse polluted silt and therewith to decrease the use of plastic material. As plastic material can be considered anhydrous as well as emulsions in water and especially artificial resin has appeared favourable.

EP 0 626 217 A1

The invention relates to the working up of waste materials which may at least partly have too high a pollution grade to be disposed of by dumping or to be used in building and road construction and/or hydraulic engineering, without expensive measures being necessary to prevent contact with ground water or spreading of polluted ground water.

The concept of waste material in fact indicates an in itself undesired product that has no direct useful application. Once such an application has been found the same material can be called a raw material.

In practice, by waste material is meant a material, which in its present state has no useful application and/or requires additional payment, sometimes in the form of transport free of charge, when being transferred. Examples of such waste materials are debris and materials derived therefrom such as refract sand, demolish sand and wash silt; glass; used plastic material that is not, or only after labour-intensive selection, suitable to be used; fibres of natural or artificial materials and even of asbestos, moulding sand; sludge, such as paper sludge, sludge from purification of waste water or preparation of drinking-water and used steal grit, often together with the material removed by grit blasting that for example may contain dyeing materials.

The working up of such waste materials, in particular residues of demolition material, poses a serious problem, because on the one hand a large flow of waste materials is generated and on the other hand the regulations with regard to polluted substances are increasingly tightened and the possibilities of disposing them by dumping or to reuse them are increasingly diminishing. Moreover, an additional difficulty is that lack of polluting substances in a non-permissible concentration, cannot by far be guaranteed in all cases.

Here in particular the leaching of the pollution out of the waste materials plays an important role. In order to determine said leachings, there are standard tests and, based thereon, requirements are set that impede pollution of the soil in which the polluted waste materials are situated, and reduce it to a minimum. Also many forms of reuse, such as for instance for land fill and road foundations, are subject to the same regulations and are consequently not permitted in case of substances with too high a pollution grade.

As a result of said difficulties in working up and reusing waste materials respectively, the disposal of such substances, in particular when they are polluted, is already expensive and is likely to become considerably more expensive in the future. This causes the waste materials to have a considerable negative value, as a result of which the preparation with the use of them of useable materials can have a cost price which is higher than the actual cost of working up.

The invention aims at preventing said difficulties and in addition at providing that the substances are accommodated in a body which is suitable for practical use and eliminates any danger of environmental pollution.

The invention provides that the waste materials are accommodated in an object of unleaching plastic material, suitable for building, road construction and/or hydraulic engineering. In this specification by plastic material is meant thermo-setting plastic materials and/or natural substances that are capable of a curing reaction, or thermoplastics. It has been found that in such a body the volume of plastic material is relatively small and considerably smaller than the one of the worked up waste materials. This considerably lowers the cost for the plastic material. Moreover, it has been found that in this way from customary waste materials, in particular demolition waste, bodies can be made that have a high compressive strength and, compared to brick and non-reinforced concrete, a high tensile strength. As a result the invention offers the possibility of obtaining good up to very good building material at a cost price that in total is lower than the one of bodies made of customary materials.

By applying the invention, naturally, bodies can be made of very different shape, such as building elements, tiles, roofing tiles, bricks, clinkers, piles, tubes and preshaped elements for road construction. The mechanical properties of plastic material allow for accommodating cavities that provide weight reduction as well as heat and/or sound insulation.

Furthermore, said objects can easily be connected to other objects or layers, for example layers of plastic material to be connected to objects of fluorescent or luminescent material, wherewith a simple means is available to make said objects from the same or a compatible plastic material as said layers.

Cavities may be created by means of the shape of the bodies or by foaming the plastic material. Another possibility of achieving a low density is to bring the waste materials to be accommodated in a porous form.

With regard to the term 'waste materials' it is pointed out that there is no universal legal description of said term. In case of materials that contain waste materials as well as normal substances, it may be possible to divide them into a polluted fraction, which is a waste material, and a fraction merely polluted in a permissible way, which then is a residual substance. Residual substances can be usefully utilized and, in applying the invention, the polluted fraction can be rendered innocuous. This does not imply that, in applying the invention, residual substances cannot be accommodated in a body as well. Therefore, in the specification the term waste materials also applies to materials containing waste as well as residual materials.

In addition, the invention has the advantage that supplied polluted material can completely be worked up into non-polluting bodies. As a result recycling companies, where the invention is applied, no longer produce waste materials themselves, as a result of which a more clear and surveyable flow of waste materials is obtained.

An additional important advantage of the invention is that the bodies obtained are suitable for reuse, for example by breaking down bodies bound with a plastic material or by reducing them in size otherwise, and by applying to them the invention, after waste material or residual material have been added or not, or, when using a thermoplastic material, by melting the body, if so desired after having added additional fractions or binding plastic material.

In accordance with an important embodiment of the invention, it is provided that the waste materials contain sludge, such as sludge obtained by washing debris, sewage sludge or fluvial mud or grindings, such as grindings of highly polluted walls like the inside walls of chimneys. Additionally, the invention not only offers the possibility of achieving reuse of sludge, also when it is polluted for example by heavy metals as is often the case with sludge from water purification plants, but the fine sludge particles also offer the possibility of reducing the interspace volume between the particles, which is to be filled with plastic material.

Application of such fine particles is not usual by manufacturing concrete and requires relatively much cement to bind also all fine particles. When taking up the material in plastic material any particle can, however, be totally surrounded and the plastic material can form one single phase without or nearly without remaining pores.

Another embodiment of the invention provides in that the waste materials contain demolition and/or breaking sand. Demolition sand is sand, which accompanies the demolished fundaments, consequently in fact the sand which surrounded the building to be demolished and breaking sand is formed when breaking the residues of waste materials and generally consist in particles of brick, grit and/or concrete with pollutions attached thereto.

It is also possible to add to the waste materials materials being per se no waste materials or residual materials, such as sand of a given particle size to increase the density of the particles in the body and to increase the hardness of the body. Such materials will be indicated with the term filler materials.

An additive of a water binding material, such as the material which is commercial available under the name AEROSIL, can improve the result.

To delimit the quantity of plastic material, which is necessary and to obtain also good mechanical properties especially a high pressure strength, it is provided, according to a further embodiment of the invention, that waste materials and/or filler materials are accommodated in the plastic material with a particle size distribution which causes a small interstice volume (so-called Fuller curve). This idea, which is described in the applicants' patent application of the same date titled "Method for working up waste materials", gives when applying the present invention a combination of the possibility to manufacture good building elements and use of relatively little plastic material when working up polluted material.

Preferably by applying the invention it is provided, that the plastic material before its setting is a low viscous liquid. Such low viscous synthetic resins or mixtures thereof with natural resins mostly are commercially indicated with the letters LV. These low viscosity gives the possibility to let the plastic material enter faster and more fully between the particles, so that each particle is surrounded by plastic material.

Vibration of the mixture of the particles of plastic material has appeared very favourable. Therewith it has been come to the fore, that in relatively short time a very close stacking of the solid particles has been obtained and by means of complete wetting, in practice the setting material will float on the surface, because it is less in weight than the waste particles and such like.

An improvement of the vibration, which per se is known from the manufacturing of concrete, can be obtained according to a further embodiment of the invention by providing, that the non set plastic material is thixotropic. By reason of this the viscosity in non-moving parts of the plastic material is relatively great, so that the plastic material does not tend to enter the pores, wherewith, however, between the different parts executing different movements a very low viscosity has been obtained by the thixotropy, which is favourable for the whole process.

When according to the invention waste and/or residual and/or filler materials are accommodated in synthetic resin preferably one manufactures objects of a predetermined shape by letting the plastic material harden in a mould.

It has also been found that the entirety, in a way known per se, can be tinted, as a result of which an attractive appearance can be obtained. Moreover, it is possible, for example by providing the inside walls of the mould with a discharge agent in a way known per se, to obtain in a smooth production process objects with smoothly finished surfaces.

The wetting by the plastic material of all particles can, in addition, especially be improved by providing that a detergent is added to the fluid.

It is also possible to take a monomer as a basis, a suspension of which is for example mixed with the particles in water, whereupon polymerization and subsequently curing can be effected.

Sofar, the best results have been achieved with resins of low viscosity.

In applying the invention for the working up of material obtained by demolishing, the residues of demolition materials are reduced in size and divided into fractions of different particle size, which, after optionally having added other fillers, are combined and mixed with fluid plastic material in such manner that a slight interspace between the particles remains.

Due to the fact that in the invention generally not very large bodies are made, the residues of the demolition materials are preferably reduced in size. It has been found that larger pieces of demolition material have the property that they admit plastic material into their pores and that as a result into bodies containing large chunks of demolition material more plastic material is admitted than into bodies having a smaller largest diameter of the particles used.

Moreover, breaking down offers the advantage that refract sand is obtained, as a result of which the demolition material in itself can provide a relatively fine fraction. Here it is pointed out that, in order to obtain a dense packing of the particles, relatively widely different fractions are desired.

Further it is possible to use fibres or fibres containing materials as substances to be disposed of. When manufacturing fibre-reinforced materials, such as heat or sound insulation plates, often edges have to be cut off.

Those edge strips and the plates themselves after use or if they have to be destroyed for other reasons, can be worked up in accordance with the invention. If the plate debris are sufficiently crushed, the fibres will seldom be cut and, therefore, will on the average keep the same length, but any binding material will be broken into small particles. If such a material is used in accordance with the invention, possibly together with other waste materials, objects may be obtained in which the fibres, even asbestos or glass fibres, cannot do any harm.

Although it is possible to apply the invention without the bodies taking a certain shape, in general it is preferably provided that the mixture of waste substances, possibly fillers and artificial resin, is brought into a mould and there is set.

Here it is preferably provided that, in way known per se, the inside wall of the mould is provided with a discharge enhancing substance.

When applying the invention, by a non-leaching plastic material is meant a plastic material that not only does not leach itself, but that in particular as an envelopment of the polluted particles prevents said particles from leaching.

Tests have shown that plastic materials meeting said requirements can easily be traced experimentally. In addition, they are subject to tests prescribed by the most severe environmental rules, whereupon it can be established to what extent a certain artificial resin should be provided with detergents and/or thixotropic enhancing substances and which are the mechanical properties that are achieved by means of certain plastic materials.

One of the important tests is to expose an object obtained with the invention during 64 days to aqua regia, a mixture of concentrated nitric acid and hydrochloric acid. The object is submitted to a leach test and it is determined whether pollution materials such as heavy metals leach from the object. In contradistinction of any type of concrete applicant knows of, no leaching of any type or strength has been determined. Of course, the plastic used has to be resistant to acid (and also to alkaline) environments, which, as practice has shown, can easily be found.

In applying the invention, in general thermoplastics as well as thermosetters can be used, where it is pointed out, however, that the compressive strength of the bodies obtained with thermoplastics is in general lower than the one of bodies obtained with thermosetters.

A further possibility is the use of plastic material free of water as well as plastic material containing water, for example an emulsion in water. A plastic or an artificial resin-which can be used with water may be advantageous when it causes the prevention of one or more fractions having to be dried.

As an example of the composition of the particles for a wet prescription the following may be used:

sludge 15% to 0.1 mm

sieve sand 35% 0.1 - 1.0 mm

refract sand 50% 1.0 - 4.0 mm.

Then 12 to 13% plastic material with wetting agent can be added to these 100% particles. As a plastic material a hard polymer from the acrylamine group can be used, while as a wetting agent FX 504 can be used to an amount of 0.5% of the total volume.

Another plastic material that has proved to be advantageous is formed by a copolymer styrene-acrylate dispersion free from softeners and solvents. Said material is available on the market under the name SAC 5010.

In applying the invention the increase in temperature during the setting process should be controlled. Due to the fact that this problem is considerably less serious with the invention than when setting massive plastic material, as the particles enclosed have to be heated as well, use can certainly be made of the general technic common to plastic material technology. In addition, the maximal temperatures occurring during the setting remain considerably lower than when setting the corresponding massive plastic material, because the particles enclosed have to be heated and as a result have a tempering effect on the temperature rise, as a result of which the reaction rate decreases so that the reaction progresses more slowly and there is more opportunity for heat dissipation. All this causes a considerable reduction of the highest occurring temperature compared to setting the massive plastic material.

In the leaching processes it has been found that, when applying appropriate low-viscosity plastic materials that, based on test results, are provided with thixotropic and/or wetting additives, results have been achieved that for none of the contaminations of material obtained from the inside layer of the chimney, led to leaching which prohibits contact between the bodies obtained with the invention and ground water.

Bodies of 100 mm x 100 mm x 400 mm were submitted to leaching in water slightly diluted with acid with a standing test time of 0.25 day; 1 day; 2 days; 4 days; 8 days; 16 days; 32 days and 64 days respectively.

Sample description:

1 : leaching water standing test time 0.25 day
2 : leaching water standing test time 1 day
3 : leaching water standing test time 2 days
4 : leaching water standing test time 4 days
5 : leaching water standing test time 8 days
6 : leaching water standing test time 16 days
7 : leaching water standing test time 32 days
8 : leaching water standing test time 64 days

| ANALYSIS | Unit | 1 | 2 | 3 | 4 | 5 | 6 | 7 |
|---|---|---|---|---|---|---|---|---|
| PRETREATMENT METAL ANALYSIS | | | | | | | | |
| No pretreatment made | | + | + | + | + | + | + | + |
| AAS-Flame technic (FAAS) | | | | | | | | |
| Zinc (Zn) | µg/l | <10 | <10 | <10 | <10 | <10 | <10 | <10 |
| AAS-Cold vapour technic (CVAAS) | | | | | | | | |
| Mercury (Hg) according to NEN 6445 | µg/l | <0.03 | <0.03 | <0.03 | <0.03 | <0.03 | <0.03 | <0.03 |
| AAS-Graphite furnace technic (GFAAS) | | | | | | | | |
| Chromium (Cr) | µg/l | 1.5 | <0.5 | <0.5 | 0.5 | 1.5 | <0.5 | <0.5 |
| Copper (Cu) | µg/l | 3.0 | 24 | 1.0 | 3.0 | 1.0 | 2.5 | 1.5 |
| Nickel (Ni) | µg/l | 4 | 2 | <1 | <1 | <1 | <1 | <1 |
| Lead (Pb) | µg/l | <1 | 10 | <1 | 2 | <1 | <1 | <1 |
| POLYCYCLIC AROMATIC HYDROCARBONS | | (o) | (o) | (o) | (o) | (o) | (o) | (o) |
| Naftalene | µg/l | * (n) | * (n) | * (n) | * (n) | * (n) | * (n) | * (n) |
| Fenanthrene | µg/l | 0.04 | 0.04 | 0.05 | 0.06 | 0.07 | 0.07 | 0.07 |
| Anthracene | µg/l | <0.01 | <0.01 | 0.01 | <0.01 | <0.01 | <0.01 | <0.01 |
| Fluoranthene | µg/l | 0.03 | 0.02 | 0.03 | 0.05 | 0.03 | 0.03 | 0.06 |
| Benzo(a)anthracene | µg/l | 0.03 (m) | <0.01 | <0.01 | 0.01 | <0.01 | <0.01 | 0.01 |
| Chrysene | µg/l | <0.01 | <0.01 | <0.01 | <0.01 | <0.01 | <0.01 | <0.01 |
| Benzo(k)fluoranthene | µg/l | <0.01 | <0.01 | <0.01 | <0.01 | <0.01 | <0.01 | <0.01 |
| Benzo(a)pyrene | µg/l | <0.01 | <0.01 | <0.01 | <0.01 | <0.01 | <0.01 | <0.01 |
| Benzo(g,h,i)perylene | µg/l | <0.01 | <0.01 | <0.01 | <0.01 | <0.01 | <0.01 | <0.01 |
| Indeno(1,2,3-c,d)pyrene | µg/l | <0.01 | <0.01 | <0.01 | <0.01 | <0.01 | <0.01 | <0.01 |
| Total 10 guide | µg/l | <0.2 | <0.2 | <0.2 | <0.2 | <0.2 | <0.2 | <0.2 |

In the totalisation of the polycyclic aromatic hydrocarbons naphthalene has not been included in the consideration.

The volume of the binding agent (the plastic material) was 10% of the volume of the material to be bound. Optimal mixing would have made 8% possible with in all likelihood better results.

Objects made by applying the invention may be of any type such as poles, piles, tiles, roofing tiles, bricks and so on.

## Claims

1. Method for working up waste materials with possibly at least partly a too high pollution grade to be allowed to be disposed of in building, road construction and/or hydraulic engineering, **characterized in** that the waste materials are accommodated in an object of unleaching plastic material suitable for building, road construction and/or hydraulic engineering.

2. Method according to claim 1, **characterized in** that the waste materials contain silt, such as debris washing silt, burnt or not burnt sludge of effluent water purification plants, sewage silt or, fluvial mud and/or grindings of severely polluted walls, such as the inner walls of chimneys.

3. Method according to claim 1 or 2, **characterized in** that the waste materials contain demolishing and/or breaking sand.

4. Method according to claim 1, 2 or 3, **characterized in** that the waste materials are accommodated in the object together with filler materials which in itself are not waste materials.

5. Method according to any of the claims 1-4, **characterized in** that waste materials and/or filler materials are accommodated in the plastic material with a particle size distribution which causes a small interstice volume (so-called Fuller curve).

6. Method according to any of the preceding claims, **characterized in** that the plastic material before its setting is a low viscous liquid.

7. Method according to claim 6, **characterized in** that a detergent has been added to the liquid.

8. Method according to claim 6 or 7, **characterized in** that the mixture of waste and filler materials with the non set plastic material is vibrated.

9. Method according to claim 6, 7 or 8, **characterized in** that the plastic material is an artificial resin.

10. Method according to claim 6, **characterized in** that the non set plastic material is thixotropic.

11. Method for working up demolition debris, **characterized in** that, possibly after breaking, the material is sieved to fine and courser fractions, after which at least the finer fractions are worked up according to any of the claims 1-10 after which the whole of plastic material and demolition debris is reused.

12. Method according to any of the preceding claims, **characterized in** that the waste materials and possibly filler materials are used in fractions of different particle sizes in such a mutual proportion that between the particles an interstitial volume remains which is as small as possible for instance smaller than 8 vol %.

13. Method according to any preceding claim, **characterized in** that at least one of the waste materials to be disposed of contains fibres, such as asbestos, glass or rock wool fibres, the fibre containing material being crushed and the fibres obtained by crushing being used as a waste material.

14. Method for manufacturing a solid object which is suitable for application in building, road construction or hydraulic engineering by using the method according to any of the preceding claims, **characterized in** that a mixture of waste materials, possibly filler materials and resin is put into a mould and set therein.

15. Method according to claim 14, **characterized in** that the inner wall of the mould has been provided with a discharge enhancing agent.

16. Object obtained by application of the method of claim 14 or 15.

7

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 091 529 (PAPETERIES DE JEAND'HEURS) <br><br> * claims * <br><br> --- | 1,2,4,6, 9,14-16 | B09B3/00 <br> C08K11/00 <br> E04C2/16 <br> E04C2/04 |
| X | US-A-4 021 401 (H. JEPPSEN) <br><br> * column 3, line 10 - column 6, line 46 * <br><br> --- | 1,3-6,9, 12,14-16 | |
| X | DE-A-32 43 361 (CHEMIE-WERK WEINSHEIM) <br> * the whole document * <br><br> --- | 1,2,4,16 | |
| X | DATABASE WPI <br> Week 8617, <br> Derwent Publications Ltd., London, GB; <br> AN 86-110262 <br> & JP-A-61 053 138 (MITSUBISHI PLASTICS) 17 March 1986 <br> * abstract * <br><br> --- | 1,4,13, 16 | |
| X | EP-A-0 466 250 (PELT & HOOYKAAS) <br><br> * column 1, line 1 - column 2, line 18 * <br> * column 3, line 20 - column 4, line 4 * <br><br> --- | 1,2,11, 16 | TECHNICAL FIELDS SEARCHED (Int.Cl.5) <br><br> B09B <br> C08K |
| X | DE-A-24 02 976 (PATURLE S.A.) <br><br> * claims 1,2 * <br><br> --- | 1,2,13, 16 | E04C <br> B03B |
| A | DATABASE WPI <br> Week 9012, <br> Derwent Publications Ltd., London, GB; <br> AN 90-087230 <br> & JP-A-2 040 277 (SUGAHARA) 9 February 1990 <br> * abstract * <br><br> --- <br><br> -/-- | 1,6,9, 11,13 | |

The present search report has been drawn up for all claims

| Place of search | Date of completion of the search | Examiner |
|---|---|---|
| THE HAGUE | 1 September 1994 | Laval, J |

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-4 541 843 (K. ELBEL)<br><br>* claim 1 *<br>--- | 5,6,<br>8-10,12 | |
| A | DE-A-31 20 831 (SKS-TECHNIK)<br>* claims 1,9 *<br>* example 1 *<br>----- | 5,6,9,12 | |

**TECHNICAL FIELDS SEARCHED (Int.Cl.5)**

The present search report has been drawn up for all claims

| Place of search | Date of completion of the search | Examiner |
|---|---|---|
| THE HAGUE | 1 September 1994 | Laval, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)